(19) Europäisches Patentamt
European Patent Office
Office européen des brevets

(11) EP 4 043 235 A1

(12) **EUROPEAN PATENT APPLICATION**
published in accordance with Art. 153(4) EPC

(43) Date of publication:
**17.08.2022 Bulletin 2022/33**

(21) Application number: **20867703.9**

(22) Date of filing: **27.08.2020**

(51) International Patent Classification (IPC):
***B60C 3/04** (2006.01)* ***B60C 11/00** (2006.01)*
***B60C 11/12** (2006.01)* ***B60C 11/13** (2006.01)*

(52) Cooperative Patent Classification (CPC):
**B60C 3/04; B60C 11/00; B60C 11/12; B60C 11/13**

(86) International application number:
**PCT/JP2020/032438**

(87) International publication number:
**WO 2021/059853 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2019 JP 2019177071**

(71) Applicant: **Sumitomo Rubber Industries, Ltd.**
**Kobe-shi, Hyogo 651-0072 (JP)**

(72) Inventors:
- **TOMISAKI, Yukari**
**Kobe-shi, Hyogo 651-0072 (JP)**
- **KOJIMA, Ryoji**
**Kobe-shi, Hyogo 651-0072 (JP)**
- **TSUCHIDA, Tsuyoshi**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

# (54) PNEUMATIC TIRE

(57) A pneumatic tire 1 comprises a tread part 2, and, with respect to a circumferential main groove 12 being located on an outermost side when the tire is mounted to a vehicle is configured that a ratio W1/W2 of a groove width W1 at a 90% groove depth position when a groove depth at a groove bottom is assumed to be 100% and a groove width W2 at a tread part surface is 0.30 to 0.75, a ratio La/Lb is 0.10 to 0.20, wherein La is a length of the tire 1 in the circumferential direction C and Lb is a total sum length of a total length Lb1 of edge component lengths of the width direction grooves 21, 22, 25, 26 in a width direction W of the tire and a total length Lb2 of edge component lengths of the sipes 23, 24, 27, 28 in the width direction W, and, with respect to the rubber composition forming the tread part 2, 5°C tan δ is 0.10 to 0.60, |20°C tan δ - 50°C tan δ| is 0.10 or less, and 20°C E' is 5.0 MPa or more.

FIG.2

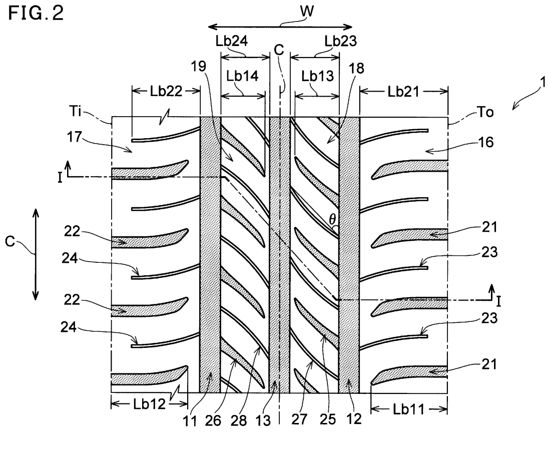


EP 4 043 235 A1

Processed by Luminess, 75001 PARIS (FR)

## Description

### TECHNICAL FIELD

The present invention relates to a pneumatic tire.

### BACKGROUND ART

Conventionally, a pneumatic tire is known that improves the groove shape of a tread part to enhance the drainage performance, improving the wet performance. For example, Patent document 1 discloses a pneumatic tire comprising three main grooves and a plurality of lug grooves to improve the drainage performance.

### PRIOR ART DOCUMENT

Patent Document

Patent document 1: JP 2000-135904 A

### SUMMARY OF THE INVENTION

### PROBLEM TO BE SOLVED BY THE INVENTION

In Patent document 1, the width of the three main grooves is increased to improve the drainage performance. However, there is a need to improve, in addition to the drainage performance, also the steering stability on dry and wet road surfaces.

In view of such problems, an object of the invention is to provide a pneumatic tire that makes it possible to improve the overall performance of steering stability on dry and wet road surfaces.

The pneumatic tire according to the invention is a pneumatic tire comprising a tread part, wherein the tread part has two or more circumferential main grooves extending continuously in a circumferential direction of the tire, a width direction groove, and a sipe, the circumferential main groove being located on an outermost side when the tire is mounted to a vehicle is configured that a ratio W1/W2 of a groove width W1 at a 90% groove depth position when a groove depth at a groove bottom is assumed to be 100% and a groove width W2 at a tread part surface is 0.30 to 0.75, a ratio La/Lb is 0.10 to 0.20, wherein La is a length of the tire in the circumferential direction and Lb is a total sum length of a total length Lb1 of edge component lengths of the width direction groove in a width direction of the tire and a total length Lb2 of edge component lengths of the sipe in the width direction, and with respect to the rubber composition forming the tread part, 5°C tan 5 is 0.10 to 0.60, |20°C tan 5 - 50°C tan δ| is 0.10 or less, and 20°C E' is 5.0 MPa or more.

### BRIEF DESCRIPTION OF THE DRAWINGS

FIG. 1 is a cross-sectional view of a pneumatic tire cut in the width direction according to one embodiment of the disclosure.
FIG. 2 is a partial development view showing a tread pattern of the pneumatic tire according to one embodiment of the disclosure.
FIG. 3 is an enlarged view of a region A shown in FIG. 1.

### EMBODIMENT FOR CARRYING OUT THE INVENTION

Below, with reference to the drawings, a pneumatic tire according to one embodiment of the disclosure will be described. Besides, the embodiment shown below is merely one example, and the pneumatic tire according to the disclosure is not limited to the embodiment below.

FIG. 1 is a transverse cross-sectional view (a transverse cross-sectional view cut along a line I-I in FIG. 2) of a pneumatic tire (below called merely "a tire") 1 according to the embodiment. FIG. 2 is a development view of a tread part 2 of the tire 1 of FIG. 1. The tire 1 according to the embodiment is suitably used as a tire for a passenger car.

As shown in FIG. 1, the tire 1 according to the embodiment comprises a carcass 6 and a belt layer 7.

The carcass 6 leads to bead cores 5 of bead parts 4 via sidewall parts 3 from the tread part 2. The carcass 6 is formed of a single carcass ply 6A, for example. The carcass ply 6A is formed of, for example, carcass cords made of

organic fibers arranged at angles each in a range from 75 to 90 degrees with respect to a tire circumferential direction (direction along a tire equator C; the direction along the tire equator C is merely called a circumferential direction C below).

The belt layer 7 is composed of at least two belt plies 7A and 7B. The belt plies 7A and 7B are formed of steel cords arranged at angles each in a range from 10 to 45 degrees with respect to the circumferential direction C, for example. The belt ply 7A is formed of, for example, steel cords inclined in a direction opposite to the steel cords of the belt ply 7B adjacent thereto. A further reinforcing layer such as a band layer and the like may be arranged on an outer side of the belt layer 7.

As shown in FIG. 2, a tread pattern whose position when mounted on a vehicle is specified is formed in the tread part 2. The tread pattern of the tread part 2 is formed in an asymmetric shape with respect to the tire equator C. The orientation of mounting of the tire 1 to the vehicle is indicated with a letter or a symbol on the sidewall part 3 and the like, for example.

The tread part 2 has an outer tread edge To and an inner tread edge Ti. The outer tread edge To is located on the outer side of the vehicle (right side in FIGS. 1 and 2) when the tire is mounted to a vehicle. The inner tread edge Ti is located on the inner side of the vehicle (left side in FIGS. 1 and 2) when the tire is mounted to a vehicle.

The tread edges To, Ti are defined as outermost ground contacting positions in a width direction W (a left-right direction in FIGS. 1 and 2; below called merely a width direction W) of the tire when the tire 1 in a standard state is in contact with a flat surface with zero camber angles by being loaded with a standard tire load. The standard state is a state in which the tire is mounted to a standard rim, inflated to a standard inner pressure, and loaded with no tire load. In this specification, unless otherwise noted, dimensions and the like of various parts of the tire are values measured in the standard state. In the standard state, a distance in the width direction W between the outer tread edge To and the inner tread edge Ti is defined as a tread width TW.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The "standard load" is a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

The tread part 2 has a plurality of circumferential grooves 11, 12, 13 extending continuously in the circumferential direction C. In FIGS. 1 and 2, three circumferential grooves 11, 12, 13 are provided. However, the number of circumferential grooves is not particularly limited, so that the number of circumferential grooves may be 2 to 5, for example. While the circumferential grooves 11, 12, 13 extend linearly along the circumferential direction C in the embodiment, the circumferential grooves may extend in a zigzag shape along the circumferential direction C. In the specification, of the circumferential grooves, a groove for which the area of a cross-section cut in the width direction W is 10 $mm^2$ or more is called a circumferential main groove. In the embodiment, all of the circumferential grooves 11, 12, 13 have a cross-sectional area of 10 $mm^2$ or more, so that they are called the circumferential main grooves 11, 12, 13 below. While there are three circumferential main grooves in the embodiment, it suffices to have two or more circumferential main grooves. The circumferential main grooves may be provided with a circumferential groove(s) (not shown) whose cross-sectional area is less than 10 $mm^2$.

A groove width of each of the circumferential main grooves 11, 12, 13 may be arbitrarily determined according to the custom. In order to provide sufficient drainage performance while maintaining pattern rigidity of the tread part 2, a groove width of each of the circumferential main grooves 11, 12, 13 preferably is approximately 2.5% to 5% of the tread width TW, for example. A groove depth of each of the circumferential main grooves 11, 12, 13 is not particularly limited, but, for a radial tire for a passenger car, it is preferably approximately 5 to 10 mm, for example.

In the embodiment, the circumferential main groove 12 being located on an outermost side when the tire is mounted to a vehicle is formed such that a ratio W1/W2 of a groove width W1 (see FIG. 3) at a 90% groove depth position when the groove depth at the groove bottom is assumed to be 100% and a groove width W2 at a tread surface is 0.30 to 0.75, preferably 0.30 to 0.60. As shown in FIG. 3, the groove width W2 refers to the dimension between a pair of shoulder parts, at which the tread surface and an inner surface of the circumferential main groove 12 cross each other. By setting the groove width W1 at the 90% groove depth position of the circumferential main groove 12 being located on the outermost side in the width direction W to be in the above-described range with respect to the groove width W2 at the tread surface, sufficient land part rigidity of the tread and deformation volume of the tread rubber can be obtained while securing the drainage performance and the grip performance when the rubber composition to be described below is used for the tread. Therefore, the steering stability can be improved. Besides, in addition to the groove width W1 at the 90% groove depth position of the circumferential main groove 12 being located on the outermost side

when the tire is mounted to the vehicle, that of the circumferential main grooves 11, 13 being other than the circumferential main groove 12 may also be set to be in the above-described range with respect to the groove width W2 at the tread surface. In case of a tire, the mounting direction to a vehicle of which is not specified, the circumferential main groove 12 being located the farthest from the tire equator C in the width direction W is the circumferential main groove 12 being located on the outermost side when the tire is mounted to the vehicle (in case that there are two farthest circumferential main grooves, at least one of the circumferential main grooves is the circumferential main groove being located on the outermost side).

The tread part 2 has a pair of shoulder land parts 16, 17 and center land parts 18, 19 located between the pair of shoulder land parts 16, 17. The pair of shoulder land parts 16, 17 and the center land parts 18, 19 are partitioned by the circumferential main groove 11, 12, 13 in the width direction W.

The shoulder land parts 16 and 17 refer to land parts of the tread part 2, which are provided at both ends in the width direction W. In the embodiment, an outer shoulder land part 16 is provided at an outer side of the vehicle in the width direction W and an inner shoulder land part 17 is provided at an inner side of the vehicle in the width direction W. In the embodiment, the outer shoulder land part 16 is a land part formed between the circumferential main groove 12 being located on the outermost side when the tire is mounted to the vehicle and the outer tread edge To. The inner shoulder land part 17 is a land part formed between the circumferential main groove 11 being located on the innermost side when the tire is mounted to the vehicle and the inner tread edge Ti.

The shoulder land parts 16, 17 has a plurality of shoulder width direction grooves 21, 22 and a plurality of shoulder sipes 23, 24 extending in a direction traversing the shoulder land parts 16, 17. The plurality of shoulder width direction grooves 21, 22 and the plurality of shoulder sipes 23, 24 are provided in each of the pair of shoulder land parts 16, 17. In the specification, the shoulder width direction groove and shoulder sipe provided in the outer shoulder land part 16 are called an outer shoulder width direction groove 21 and an outer shoulder sipe 23, respectively. Moreover, the shoulder width direction groove and shoulder sipe provided in the inner shoulder land part 17 are called an inner shoulder width direction groove 22 and an inner shoulder sipe 24, respectively.

In the specification, a "groove" including the width direction groove refers to a recess having a width greater than at least 2.0 mm. On the other hand, in the specification, a "sipe" refers to a thin cut having a width of 2.0 mm or less, preferably 0.5 to 2.0 mm.

The center land parts 18, 19 refer to land parts provided at the center portion in the width direction W of the tread part 2. In the embodiment, two center land parts 18, 19 are provided between the outer shoulder land part 16 and the inner shoulder land part 17 (between the circumferential main groove 12 and the circumferential main groove 11). The number of center land parts is not particularly limited and may be one or a plurality. In the embodiment, an outer-side center land part 18 is provided at an outer side of the vehicle in the center portion of the tread part 2, and an inner-side center land part 19 is provided at an inner side of the vehicle in the center portion of the tread part 2. In the embodiment, the outer-side center land part 18 is a land part formed between the circumferential main groove 13 provided along the tire equator C and the circumferential main groove 12 located on the outermost side when the tire is mounted to the vehicle. The inner-side center land part 19 is a land part formed between the circumferential main groove 13 provided along the tire equator C and the circumferential main groove 11 located on the innermost side when the tire is mounted to the vehicle.

The center land parts 18, 19 has a plurality of center width direction grooves 25, 26 and a plurality of center sipes 27, 28 extending in a direction traversing the center land parts 18, 19. The plurality of center width direction grooves 25, 26 and the plurality of center sipes 27, 28 are provided in each of the center land parts 18, 19. In the specification, the center width direction groove and center sipe provided in the outer-side center land part 18 are called an outer-side center width direction groove 25 and an outer-side center sipe 27, respectively. Moreover, the center width direction groove and center sipe provided in the inner-side center land part 19 are called an inner-side center width direction groove 26 and an inner-side center sipe 28, respectively.

In the embodiment, the width direction grooves 21, 22, 25, 26 and the sipes 23, 24, 27, 28 are formed such that a ratio La/Lb is 0.10 to 0.20, preferably 0.13 to 0.17, wherein La is a length of the tire 1 in the circumferential direction C and Lb is a total sum length of a total length Lb1 of edge component lengths of the width direction grooves 21, 22, 25, 26 in the width direction W and a total length Lb2 of edge component lengths of the sipes 23, 24, 27, 28 in the width direction W. By setting the relationship between the edge component lengths of the width direction grooves 21, 22, 25, 26 and the sipes 23, 24, 27, 28, and the length La of the tire 1 in the circumferential direction C in the above-described range, it is possible to set deformation of the tread part 2 to be in a predetermined range and secure the area of the land parts 16, 17, 18, 19 of the tread part 2 to be equal to or greater than predetermined. Therefore, it is possible to improve the overall performance of steering stability on dry and wet road surfaces when the rubber composition to be described below is used for the tread.

The "length of edge components in the width direction W" of the width direction grooves 21, 22, 25, 26 and the sipes 23, 24, 27, 28 refer to a projected length of the width direction grooves 21, 22, 25, 26 and the sipes 23, 24, 27, 28 in the width direction W (the length of the width direction component of the width direction component and the circumferential direction component) as shown in FIG. 2. Specifically, the length of the edge component in the width direction W in the outer shoulder width direction groove 21 is the length shown with Lb11 in FIG. 2 and the length of edge component of the inner shoulder width direction groove 22 in the width direction W is the length shown with Lb12 in FIG. 2. Moreover, the length of the edge component of the outer-side center width direction groove 25 in the width direction W is the length shown with Lb13 in FIG. 2 and the length of the edge component of the inner-side center width direction groove 26 in the width direction W is the length shown with Lb14 in FIG. 2. Furthermore, the length of the edge component of the outer shoulder sipe 23 in the width direction W is the length shown with Lb21 in FIG. 2 and the length of the edge component of the inner shoulder sipe 24 in the width direction W is the length shown with Lb22 in FIG. 2. Moreover, the length of the edge component of the outer-side center sipe 27 in the width direction W is the length shown with Lb23 in FIG. 2 and the length of the edge component of the inner-side center sipe 28 in the width direction W is the length shown with Lb24 in FIG. 2.

The "total length Lb1 of the edge component lengths of the width direction grooves 21, 22, 25, 26 in the width direction W" refers to a total length in which the lengths (Lb11, Lb12, Lb13, Lb14) of the edge component in the width direction W for each one of the width direction grooves are multiplied by the number of each of the width direction grooves. Similarly, the "total length Lb2 of the edge component lengths of the sipes 23, 24, 27, 28 in the width direction W" refers to a total length in which the lengths (Lb21, Lb22, Lb23, Lb24) of the edge component in the width direction W for each one of the sipes are multiplied by the number of each of the sipes. Moreover, the "total sum length Lb" is the length in which Lb1 and Lb2 are added.

Furthermore, it is preferable that a ratio La/Lb1 is 0.20 to 0.40, wherein La is a length of the tire in the circumferential direction C and Lb1 is a total length of edge component lengths of the width direction grooves 21, 22, 25, 26 in the width direction W. By setting the relationship between the total length Lb1 of edge component lengths of the width direction grooves 21, 22, 25, 26 in the width direction W and the length La of the tire in the circumferential direction C within the above-described range, it is possible to further enhance the effect of the rubber composition to be described below.

Moreover, it is preferable that a ratio $Lb_{sh}/Lb_{ce}$ satisfies $Lb_{sh}/Lb_{ce}<1$, wherein $Lb_{sh}$ is a total sum length of a total length $Lb_{sh}1$ of the edge component lengths of the width direction grooves 21, 22 in the width direction W in the shoulder land parts 16, 17 and a total length $Lb_{sh}2$ of the edge component lengths of the sipes 23, 24 in the width direction W in the shoulder land parts 16, 17, and Lbce is a total sum length of a total length Lbce1 of the edge component lengths of the width direction grooves 25, 26 in the width direction W in the center land parts 18, 19 and a total length $Lb_{ce}2$ of the edge component lengths of the sipes 27, 28 in the width direction W in the center land parts 18, 19. In this case, the edge components in the shoulder land parts 16, 17 decrease, increasing the rigidity of the shoulder land parts 16, 17. Therefore, abrasion of the shoulder land parts 16, 17 is suppressed, making it possible to improve the steering stability on dry and wet roads.

While the groove width of the width direction grooves 21, 22, 25, 26 is not particularly limited, the groove width of the width direction grooves 21, 22, 25, 26 is preferably 0.4% to 0.8% of the tread width TW, for example. While the groove depth of the width direction grooves 21, 22, 25, 26 is not particularly limited, the groove depth of the width direction grooves 21, 22, 25, 26 is preferably 0.50 to 0.60 times the groove depth of the circumferential main grooves 11, 12, 13, for example. Furthermore, while the groove width of the sipes 23, 24, 27, 28 is not particularly limited, the groove width of the sipes 23, 24, 27, 28 is, for example, 2.0 mm or less, preferably 0.8 mm or less. Moreover, while the groove depth of the sipes 23, 24, 27, 28 is not particularly limited, the groove depth of the sipes 23, 24, 27, 28 is preferably 0.50 to 0.60 times the groove depth of the circumferential main grooves 11, 12, 13, for example.

Furthermore, in the embodiment, as shown in FIG. 2, the sipes 27, 28 in the center land parts 18, 19 extend so as to connect both edge parts, which are the edges in the width direction W, of the center land parts 18, 19 and an angle $\theta$ formed by the circumferential main groove 12 and a straight line connecting both ends in the width direction W of the sipes 27, 28 in the center land parts 18, 19 is preferably in a range of 60 to 80 degrees. In this case, a water film can be raked out in the center land parts 18, 19, making it possible to improve the braking performance on a wet road surface.

While the angle of the width direction grooves 25, 26 in the center land parts 18, 19 is not particularly limited, in the same manner as the sipes 27, 28 of the center land parts 18, 19, for example, the angle $\theta$ formed by the circumferential main groove 12 and a straight line connecting both ends in the width direction W of the width direction grooves 25, 26 in the center land parts 18, 19 is preferably in a range of 60 to 80 degrees. Moreover, while the angle of the shoulder width direction grooves 21, 22 and the shoulder sipes 23, 24 is not particularly limited, they are preferably formed with the angle of 0 to 20 degrees with respect to the circumferential direction C, for example.

Furthermore, it is preferable that when a tire cross-sectional width is Wt (mm) and an outer diameter of the tire is Dt (mm), the tire cross-sectional width Wt and the outer diameter Dt satisfy the formula below:

$$59.078 \times Wt^{\wedge}0.460 \leq Dt,$$

and a dynamic storage modulus E' of the tread rubber at 30°C is 5.0 to 15. 0 MPa. In this case, it is possible to reduce weight of the tire and reduce rolling resistance of the tire. Moreover, by the dynamic storage modulus E' of the tread rubber at 30°C in the above-described range, it is possible to improve, on a wet road surface, the steering stability of a radial tire having a large diameter and a small width. The tire cross-sectional width Wt and the outer diameter Dt in the above-described formula represents a numerical value at a predetermined internal pressure (standard pressure; for example, 250 kPa or more). Moreover, in the above-described formula, when the tire cross-sectional width Wt is 165 mm or more, it is preferable that the ratio Wt/Dt of the tire cross-sectional width Wt and the outer diameter Dt is 0.30 or less.

<Rubber composition>

In the tire in the embodiment, with respect to the rubber composition forming the tread part, 5°C tan 5 is 0.10 to 0.60, preferably 0.20 to 0.50, |20°C tan 5 - 50°C tan δ| is 0.10 or less, preferably 0.06 or less, and 20°C E' (a dynamic storage modulus at 20°C) is 5.0 MPa or more and 20 MPa or less, preferably 8.0 MPa or more and 16 MPa or less. By the above-described structure of the tire, particularly the shape of the tread, and physical properties of the rubber composition cooperating with each other of the disclosure, it is possible to improve the overall performance of steering stability on dry and wet road surfaces. Such rubber composition for tire may be formed of a rubber component and the other components and may be obtained by conventional methods. The rubber composition for tire is formed of a rubber component and the other components.

"5°C tan δ", "20°C tan δ", and "50°C tan δ" in the disclosure refer to tan 5 (loss tangent) at 5°C, tan 5 at 20°C, and tan 5 at 50°C, respectively, measured under conditions of frequency 10 Hz and elongation strain 2.5%. Besides, 5°C tan δ, 20°C tan δ, and 50°C tan 5 of the rubber composition can be appropriately adjusted in accordance with the type and compounding amount of the rubber component, a filler, a plasticizing agent, and the like to be described below.

From a viewpoint of the effect of the disclosure, 5°C tan δ is 0.10 or more, preferably 0.15 or more, more preferably 0.20 or more, further preferably 0.25 or more, and particularly preferably 0.30 or more. Moreover, 5°C tan δ is 0.60 or less, preferably 0.55 or less, more preferably 0.50 or less, and further preferably 0.45 or less.

From a viewpoint of the effect of the disclosure, 20°C tan δ is preferably 0.10 or more, more preferably 0.15 or more, further preferably 0.20 or more, and particularly preferably 0.25 or more. Moreover, 20°C tan δ is preferably 0.50 or less, more preferably 0.45 or less, and further preferably 0.40 or less.

From a viewpoint of the effect of the disclosure, 50°C tan δ is preferably 0.05 or more, more preferably 0.10 or more, further preferably 0.15 or more, and particularly preferably 0.20 or more. Moreover, 50°C tan δ is preferably 0.45 or less, more preferably 0.40 or less, and further preferably 0.30 or less.

From a viewpoint of the effect of the disclosure, |20°C tan δ - 50°C tan δ| is 0.10 or less, preferably 0.09 or less, more preferably 0.08 or less, further preferably 0.07 or less, and particularly preferably 0.06 or less. A lower limit of |20°C tan δ - 50°C tan δ| is not particularly limited.

In the disclosure, the dynamic storage modulus E' at 20°C (20°C E') refers to the dynamic storage modulus E' at 20°C being measured under a condition of an initial strain of 10%, a dynamic strain of 2%, and a frequency of 10 Hz using a dynamic viscoelasticity measurement apparatus. 20°C E' of the rubber composition can be appropriately adjusted in accordance with the type and compounding amount of the rubber component, a filler, and a plasticizing agent to be described below.

Examples of the rubber components include an isoprene-based rubber, a butadiene rubber (BR), a styrene-butadiene rubber (SBR), an acrylonitrile-butadiene rubber (NBR), a chloroprene rubber (CR), a butyl rubber (IIR), a styrene-isoprene-butadiene copolymer rubber (SIBR), and the like. These rubbers may be used alone or two or more rubbers can be used in combination. Among them, from the viewpoint of the effect of the disclosure being obtained more suitably, it is preferable that the rubber components contain at least one type to be selected from the isoprene-based rubber, BR, and SBR and it is more preferable that the rubber components contain both BR and SBR.

In the case where the rubber composition contains an isoprene-based rubber, a content (a total content) of the isoprene-based rubber in 100% by mass of the rubber component is, for example, 5% by mass or more and 100% by mass or less. From the viewpoint of being superior in rubber kneading and extrusion processability, the content of the isoprene-based rubber is preferably 10% by mass or more and more preferably 20% by mass or more. Moreover, from the viewpoint of being superior in low temperature characteristics, the content of the isoprene-based rubber is preferably 80% by mass or less and more preferably 70% by mass or less. Examples of the isoprene-based rubber include a natural rubber (NR), an isoprene rubber (IR), a reformed NR, a modified NR, a modified IR, and the like. As the NR, NRs that are generally used in the tire industry, such as SIR20, RSS#3, TSR20, and the like, can be used. As the IR, although it is not particularly limited, IRs that are generally used in the tire industry, such as IR 2200 and the like can be used. Examples of the reformed NR include a deproteinized natural rubber (DPNR), a high-purity natural rubber, and the like, and examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. These isoprene-based rubbers may be used alone or

two or more these rubbers may be used in combination.

In the case where the rubber composition contains SBR, a content of the SBR in 100% by mass of the rubber component is, for example, 5% by mass or more and 100% by mass or less. The content of the SBR is preferably 10% by mass or more, more preferably 20% by mass or more, further preferably 30% by mass or more, and particularly preferably 40% by mass or more. Moreover, the content of the SBR is preferably 90% by mass or less, more preferably 80% by mass or less, and further preferably 75% by mass or less. In the case where an oil-extended SBR (oil-extended rubber) is used as the SBR, a content of the SBR itself as a solid component comprised in the oil-extended SBR shall be the content of the SBR in the rubber component. A weight-average molecular weight of the SBR is 100,000 or more and 2,000,000 or less, for example. A styrene content of the SBR is 5% by mass or more and 50% by mass or less, for example. A vinyl content (1,2-bond butadiene unit amount) of the SBR is 5 mol% or more and 70 mol% or less, for example. The structural identification (the measurement of the styrene content, vinyl content) of the SBR is carried out using a JNM-ECA Series apparatus manufactured by JEOL Ltd.

The SBR is not particularly limited, and an emulsion-polymerized styrene-butadiene rubber (E-SBR), a solution-polymerized styrene-butadiene rubber (S-SBR), and the like, for example, can be used. The SBR may be either one of an unmodified SBR and a modified SBR.

The modified SBR can be an SBR having a functional group to interact with a filler such as silica and the like, and examples of the modified SBR include, for example, a terminal modified SBR in which at least one terminal of the SBR is modified with a compound (modifying agent) having the above-described functional group (a terminal modified SBR having the above-described functional group at the terminal), a main chain-modified SBR having the above-described functional group in the main chain, a main chain terminal-modified SBR having the above-described functional group in the main chain and the terminal (for example, a main chain terminal-modified SBR having the above-described functional group in the main chain, and at least one terminal being modified with the above-described modifying agent), and a terminal modified SBR and the like being modified (coupled) with a polyfunctional compound having two or more epoxy groups in its molecule and into which a hydroxyl group or an epoxy group is introduced.

Examples of the above-described functional group include, for example, an amino group, an amide group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. These functional groups may have a substituent group.

As the modified SBR, an SBR modified with a compound (modifying agent) expressed by the below-described formula, for example, can be used:

[Chemical formula 1]

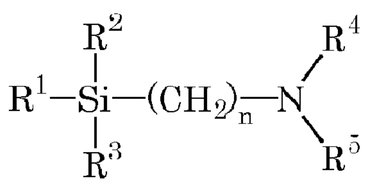

(In the formula, $R^1$, $R^2$, and $R^3$ are the same or different and represent an alkyl group, an alkoxy group, a silyloxy group, an acetal group, a carboxyl group (-COOH), a mercapto group (-SH), or a derivative thereof. $R^4$ and $R^5$ are the same or different and represent a hydrogen atom or an alkyl group. $R^4$ and $R^5$ can be bonded to form a ring structure with a nitrogen atom. n represents an integer.)

As a modified SBR modified with the compound (modifying agent) expressed by the above-described chemical formula, an SBR obtained by modifying the polymerization terminals (active terminals) of solution-polymerized styrene-butadiene rubber (S-SBR) with the compound expressed by the above-described formula (modified SBR and the like disclosed in Japanese Patent Application Publication No. 2010-111753) can be used.

As $R^1$, $R^2$, and $R^3$, an alkoxy group (an alkoxy group preferably having 1 to 8 carbon atoms, more preferably having 1 to 4 carbon atoms) is suitable. As $R^4$ and $R^5$, an alkyl group (an alkyl group preferably having 1 to 3 carbon atoms) is suitable. n is preferably 1 to 5, more preferably 2 to 4, and further preferably 3. Moreover, when $R^4$ and $R^5$ are bonded to form a ring structure with a nitrogen atom, the ring structure is preferably a 4 to 8 membered ring. The alkoxy group also includes a cycloalkoxy group (cyclohexyloxy group and the like), and an aryloxy group (phenoxy group, benzyloxy group, and the like).

Specific examples of the modifying agent include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl

trimethoxysilane, 3- diethylaminopropyl trimethoxysilane, 2-diethylaminoethyl triethoxysilane, 3-diethylaminopropyl triethoxysilane, and the like. These modifying agents may be used alone or two or more thereof may be used in combination.

As the modified SBR, the modified SBR modified with the below-described compounds (modifying agents) can also be used. Examples of the modifying agents can include, for example, polyglycidyl ethers of polyhydric alcohols such as ethylene glycol diglycidyl ether, glycerin triglycidyl ether, trimethylolethane triglycidyl ether, trimethylolpropane triglycidyl ether, and the like; polyglycidyl ethers of aromatic compounds having two or more phenol groups, such as a diglycidylated bisphenol A and the like; polyepoxy compounds such as 1,4-diglycidylbenzene, 1,3,5-triglycidylbenzene, polyepoxidized liquid polybutadiene, and the like; epoxy group-containing tertiary amines such as 4-4'-diglycidyl-diphenylmethylamine, 4-4'- diglycidyl -dibenzylmethylamine, and the like; diglycidylamino compounds such as diglycidylaniline, N,N'-diglycidyl-4-glycidyloxy aniline, diglycidyl orthotoluidine, tetraglycidyl metaxylenediamine, tetraglycidylaminodiphenylmethane, tetraglycidyl-p-phenylenediamine, diglycidylaminomethylcyclohexane, tetraglycidyl-1,3-bisaminomethylcyclohexane, and the like; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, N,N-diethylcarbamic acid chloride, and the like; epoxy group-containing silane compounds such as 1,3-bis-(glycidyloxypropyl)-tetramethyldisiloxane, (3-glycidyloxypropyl)-pentamethyldisiloxane, and the like; sulfide group-containing silane compounds such as (trimethylsilyl) [3-(trimethoxysilyl)propyl] sulfide, (trimethylsilyl) [3-(triethoxysilyl)propyl] sulfide, (trimethylsilyl) [3-(tripropoxysilyl)propyl] sulfide, (trimethylsilyl) [3-(tributoxysilyl)propyl] sulfide, (trimethylsilyl) [3-(methyldimethoxysilyl)propyl] sulfide, (trimethylsilyl) [3-(methyldiethoxysilyl)propyl] sulfide, (trimethylsilyl) [3-(methyldipropoxysilyl)propyl] sulfide, (trimethylsilyl) [3-(methyldibutoxysilyl)propyl] sulfide, and the like; N- substituted aziridine compounds such as ethyleneimine, propyleneimine, and the like; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, N,N-bis(trimethylsilyl)aminoethyltriethoxysilane, and the like; (thio)benzophenone compounds having an amino group and/or a substituted amino group, such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, N,N,N',N'-bis-(tetraethylamino) benzophenone, and the like; benzaldehyde compounds having an amino group and/or a substituted amino group, such as 4-N,N-dimethylaminobenzaldehyde, 4-N,N-diphenylaminobenzaldehyde, 4-N,N-divinylaminobenzaldehyde, and the like; N-substituted pyrrolidones such as N-methyl-2-pyrrolidone, N-vinyl-2-pyrrolidone, N-phenyl-2-pyrrolidone, N-t-butyl-2-pyrrolidone, N-methyl-5-methyl-2-pyrrolidone, and the like; N-substituted piperidones such as N-methyl-2-piperidone, N-vinyl-2-piperidone, N-phenyl-2-piperidone, and the like; and N-substituted lactams such as N-methyl-ε-caprolactam, N-phenyl-ε-caprolactam, N-methyl-ω-laurylolactam, N-vinyl-ω-laurylolactam, N-methyl-β-propiolactam, N-phenyl-β-propiolactam, and the like, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethylurea, 1,3-dimethylethyleneurea, 1,3-divinylethyleneurea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, 1,7-bis(methylethylamino)-4-heptanone, and the like. Modification with the above-described compounds (modifying agents) can be performed using a known method.

As the SBRs, those SBRs manufactured by and available from Sumitomo Chemical Co., Ltd., JSR Corporation, Asahi Kasei Corporation, Zeon Corporation, etc., for example, can be used. These SBRs may be used alone or two or more thereof may be used in combination.

In the case where the rubber composition contains BR, a content of the BR in 100% by mass of the rubber component is, for example, 5% by mass or more and 100% by mass or less. From the viewpoint of abrasion resistance, the content of the BR is preferably 7% or more by mass, more preferably 9% by mass or more, more preferably 12% by mass or more, and further preferably 15% by mass or more. Moreover, from the viewpoint of the molding processability, the content of the BR is preferably 80% by mass or less, more preferably 70% by mass or less, more preferably 60% by mass or less more, and further preferably 50% by mass or less. The weight-average molecular weight of the BR is 100,000 or more and 2,000,000 or less., for example. The vinyl content of the BR is 1 mol% or more and 30 mol% or less, for example. The cis content of the BR is 1 mol% or more and 98 mol% or less, for example. The trans content of the BR is 1 mol% or more and 60 mol% or less, for example.

The BR is not particularly limited, and a BR having a high cis content (BR having a cis content of 90% or more), a BR having a low cis content, a BR containing a syndiotactic polybutadiene crystal, and the like can be used. The BR can be either one of an unmodified BR and a modified BR, and, examples of the modified BR include a modified BR in which the previously described functional group is introduced. These BRs may be used alone or two or more thereof may be used in combination. Among them, for the reason of being superior in abrasion resistance, the high cis BR is preferable. The cis content can be measured by infrared absorption spectrometry.

As the BRs, products from Ube Industries, Ltd., JSR Corporation, Asahi Kasei Corporation, Zeon Corporation, etc., for example, can be used.

The rubber composition preferably comprises, as a filler, carbon black and/or silica. The filler may be configured to be consists of only carbon black and silica.

The rubber composition preferably comprises carbon black. The content of carbon black based on 100 parts by mass of the rubber component is, for example, 1 part by mass or more and 200 parts by mass or less. From the viewpoint of the reinforcing property and abrasion resistance, the content of carbon black is preferably 2 parts by mass or more, more preferably 3 parts by mass or more, more preferably 4 parts by mass or more, and further preferably 5 parts by mass or more. Moreover, from the viewpoint of the fuel efficiency and the processability, the content of carbon black is preferably 180 parts by mass or less, more preferably 150 parts by mass or less, more preferably 120 parts by mass or less, and further preferably 100 parts by mass or less.

Carbon black is not particularly limited, and examples of carbon black can include furness black (furness carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; graphite; and the like. These carbon blacks may be used alone or two or more carbon blacks may be used in combination.

A nitrogen adsorption specific surface area ($N_2SA$) of carbon black is preferably 30 $m^2/g$ or more and 250 $m^2/g$ or less, for example. From the viewpoint that sufficient reinforcing property and abrasion resistance are obtained, the $N_2SA$ of carbon black is preferably 50 $m^2/g$ or more, more preferably 70 $m^2/g$ or more, and further preferably 90 $m^2/g$ or more. Moreover, from the viewpoints of being superior in dispersibility and less liable to dissipate heat, the $N_2SA$ of carbon black is preferably 200 $m^2/g$ or less, more preferably 180 $m^2/g$ or less, and further preferably 160 $m^2/g$ or less. The dibutyl phthalate (DBP) absorption amount of carbon black is 50 ml/100 g or more and 250 ml/100 g or less, for example. The nitrogen adsorption specific surface area of carbon black is measured according to ASTM D4820-93, and the DBP absorption amount is measured according to ASTM D2414-93.

Carbon black is not particularly limited, and examples of carbon black include N134, N110, N220, N234, N219, N339, N330, N326, N351, N550, N762, and the like. As commercially available products, products such as those from Asahi Carbon Co., Ltd., Cabot Japan K.K., Tokai Carbon Co., Ltd., Mitsubishi Chemical Corporation, Lion Corporation, Nippon Steel Chemical Carbon Co., Ltd., Columbia Carbon Co., etc., for example, can be used. These products may be used alone or two or more products may be used in combination.

The rubber composition preferably comprises silica. Examples of silica include dry-process silica (anhydrous silica) and wet-process silica (hydrous silica), for example. Among them, wet-process silica is preferable because it has a higher silanol group content.

A content of silica based on 100 parts by mass of the rubber component is 1 part by mass or more and 200 parts by mass or less, for example. From the viewpoint of fuel efficiency, the content of silica is preferably 10 parts by mass or more, preferably 15 parts by mass or more, more preferably 20 parts by mass or more, more preferably 25 parts by mass or more, and further preferably 35 parts by mass or more. Moreover, from the viewpoints of the dispersibility of silica, the processability, and the wet grip performance, the content of silica is preferably 180 parts by mass or less, more preferably 150 parts by mass or less, more preferably 130 parts by mass or less, and further preferably 120 parts by mass or less.

A nitrogen adsorption specific surface area ($N_2SA$) of silica is 40 $m^2/g$ or more and 300 $m^2/g$ or less, for example. From the viewpoint of elongation at break, the $N_2SA$ of silica is preferably 80 $m^2/g$ or more, more preferably 100 $m^2/g$ or more, more preferably 115 $m^2/g$ or more, and further preferably 175 $m^2/g$ or more. Moreover, from the viewpoints of the fuel efficiency and the processability, the $N_2SA$ of silica is preferably 280 $m^2/g$ or less, more preferably 250 $m^2/g$ or less, more preferably 210 $m^2/g$ or less, and further preferably 190 $m^2/g$ or less. Besides, the $N_2SA$ of silica is a value measured by a BET method in accordance with ASTM D3037-93.

As silica, those products from Evonik Degussa, Rhodia, Tosoh Silica Corporation, Solvay Japan, Ltd., Tokuyama Corporation, etc., for example, can be used.

The rubber composition preferably comprises a silane coupling agent with silica. The silane coupling agent is not particularly limited, and examples of the silane coupling agent include, for example, sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, 3-triethoxysilylpropyl methacrylate monosulfide, and the like; a mercapto-based silane coupling agent such as 3-mercaptopropyltrimethoxysilane, 2-mercaptoethyltriethoxysilane, NXT, NXT-Z manufactured by Momentive Performance Materials, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like. These silane coupling agents may be used alone or two or more of the silane

coupling agents may be used in combination.

As the silane coupling agents, those products from Evonik Degussa, Momentive Performance Materials, Shin-Etsu Chemical Co., Ltd., Tokyo Chemical Industry Co., Ltd., AZmax Co., Dow Corning Toray Co., Ltd., etc., for example, can be used.

A content of the silane coupling agent based on 100 parts by mass of silica is 3 parts by mass or more and 25 parts by mass or less, for example. From the viewpoint of easily obtaining the improvement effect of the dispersibility of silica, the content of the silane coupling agent is preferably 4 parts by mass or more, and more preferably 6 parts by mass or more. Moreover, from the viewpoint of easily obtaining the effect appropriate to the cost, the content of the silane coupling agent is preferably 20 parts by mass or less, and more preferably 15 parts by mass or less.

From the viewpoint of abrasion resistance, a total content of the filler based on 100 parts by mass of the rubber component is preferably 40 parts by mass or more, more preferably 50 parts by mass or more, and further preferably 60 parts by mass or more. Moreover, from the viewpoints of fuel efficiency and elongation at break, it is preferably 160 parts by mass or less, more preferably 140 parts by mass or less, and further preferably 120 parts by mass or less.

A proportion of silica to the total content of silica and carbon black is preferably 30% by mass or more, more preferably 50% by mass or more, further preferably 70% by mass or more, and particularly preferably 80% by mass or more.

The rubber composition can comprise a plasticizing agent such as a liquid polymer, a solid polymer, oil, an ester-based plasticizing agent, and the like.

The liquid polymer is a polymer in liquid state at room temperature (25°C), while the solid polymer is a polymer in solid state at room temperature (25°C). Examples of the liquid polymer and solid polymer include a farnesene-based polymer, a liquid diene-based polymer, a styrene-based resin, a coumarone-indene resin, a terpene-based resin, a p-t-butylphenolacetylene resin, a phenol-based resin, a C5 resin, a C9 resin, a C5/C9 resin, an acrylic-based resin, and the like.

The farnesene-based polymer is a polymer obtained by polymerizing farnesene and has a constituting unit based on farnesene. There are isomers such as α-farnesene((3E,7E)-3,7,11-trimethyl-1,3,6,10-dodecatetraene and β-farnesene(7,11-dimethyl-3-methylene-1,6,10-dodecatriene) present for farnesene.

The farnesene-based polymer may be a homopolymer of farnesene (farnesene homopolymer) or a copolymer of farnesene and a vinyl monomer (farnesene-vinyl monomer copolymer).

Examples of the vinyl monomer include aromatic vinyl compounds such as styrene, 2-methylstyrene, 3-methylstyrene, 4-methylstyrene, α-methylstyrene, 2,4-dimethylstyrene, 2,4-diisopropyl styrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethylether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, tertiary amino group containing diphenylethylene, and the like; and conjugated diene compounds such as butadiene, isoprene, and the like. These vinyl monomers may be used alone or two or more of the vinyl monomers may be used in combination.

As the farnesene-based polymer, a liquid farnesene-based polymer can be used. The liquid farnesene-based polymer is a farnesene-based polymer being a liquid at room temperature (25°C)), and a farnesene-based polymer having a weight-average molecular weight (Mw) of 3,000 to 300,000 can be used.

The glass transition temperature (Tg) of the farnesene-based polymer is -100°C or more and -10°C or less, for example. Tg is a value measured under the condition of a temperature increase rate of 10°C/min using a differential scanning calorimeter (Q200) manufactured by TA Instruments Japan Co. in accordance with JIS-K7121:1987.

The melt viscosity of the farnesene-based polymer is 0.1 Pa·s or more and 500 Pa·s or less, for example. The melt viscosity is a value measured at 38°C using a Brookfield type viscosity meter (manufactured by BROOKFIELD ENGINEERING LABS., INC.)

In the farnesene-vinyl monomer copolymer, the copolymerization ratio of farnesene and vinyl monomer (farnesene/vinyl monomer) on a mass basis is 40/60 to 90/10, for example.

A content of the farnesene-based polymer based on 100 parts by mass of the rubber component is 1.0 parts by mass or more and 50.0 by mass or less, for example.

As the farnesene-based polymer, those products from Kuraray Co., Ltd., etc., for example, can be used.

Examples of the liquid diene-based polymer include a liquid styrene-butadiene copolymer (liquid SBR), a liquid butadiene polymer (liquid BR), a liquid isoprene polymer (liquid IR), a liquid styrene-isoprene copolymer (liquid SIR), and the like.

The weight-average molecular weight (Mw) of the liquid diene-based polymer, which is measured by gel permeation chromatography (GPC) and obtained by polystyrene converted, is $1.0\times10^3$ to $2.0\times10^5$, for example. In the specification, the Mw of the liquid diene-based polymer is a polystyrene converted value measured by gel permeation chromatography (GPC).

A content of the liquid polymers (a total content of the liquid farnesene-based polymer, the liquid diene-based

polymer, and the like) is 1 part by mass or more and 100 parts by mass or less, for example, based on 100 parts by mass of the rubber component.

The coumarone-indene resin is a resin containing coumarone and indene as monomer components constituting the skeleton (main chain) of the resin. Examples of the monomer components contained in the skeleton other than coumarone and indene include styrene, α-methylstyrene, methylindene, vinyltoluene, and the like.

A content of the coumarone-indene resin is 1.0 parts by mass or more and 50.0 parts by mass or less, for example, based on 100 parts by mass of the rubber component.

A hydroxy value (OH value) of the coumarone-indene resin is 15 mg KOH/g or more and 150 mg KOH/g or less, for example. The OH value is expressed, in the number of milligrams, as the amount of potassium hydroxide required to neutralize acetic acid bonded to the hydroxy group when 1 gram of resin is acetylated and is a value measured by the potential difference titration method (JIS K 0070:1992).

A softening point of the coumarone-indene resin is 30°C or higher and 160°C or lower, for example. The softening point is a temperature at which a sphere drops when the softening point specified in JIS K 6220-1: 2001 is measured with a ring and ball softening point measuring device.

The styrene-based resin is a polymer in which a styrene-based monomer is used as a constituting monomer, and examples of the styrene-based resin include a polymer in which a styrene-based monomer is polymerized as a main component (50% by mass or more), and the like. Specifically, a homopolymer in which each of the styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, and the like) is polymerized alone, a copolymer in which two or more styrene-based monomers are copolymerized, as well as a copolymer of a styrene-based monomer and a different monomer that can copolymerize therewith.

As the different monomers, acrylonitriles such as acrylonitrile and methacrylonitrile; acrylics; unsaturated carbonic acids such as methacrylic acid; esters of unsaturated carbonic acid, such as acrylic acid methyl and methacrylic acid methyl; dienes such as chloroprene and butadiene isoprene; olefins such as 1-butene and 1-pentene; α,β-unsaturated carbonic acid or anhydride thereof such as malleic acid anhydride and the like can be exemplified.

Examples of the terpene-based resins include polyterpenes, terpene phenols, aromatic modified terpene resins, and the like. Polyterpenes are resins obtained by polymerizing terpene compounds and hydrogenated products thereof. The terpene compounds are hydrocarbons represented by a composition of $(C_5H_8)_n$ and oxygenated derivatives thereof, and are compounds having, as the basic backbone, a terpene classified into monoterpene ($C_{10}H_{16}$), sesquiterpene ($C_{15}H_{24}$), diterpene ($C_{20}H_{32}$), and the like, and the examples of the terpene compounds include, for example, α-pinene, β-pinene, dipentene, limonene, myrcene, allo-ocimene, ocimene, α-phellandrene, α-terpinene, γ-terpinene, terpinolene, 1,8-cineol, 1,4-cineol, α-terpineol, β-terpineo!, γ-terpinene, and the like.

Examples of the polyterpenes also include terpene resins made from the above-described terpene compounds, such as an α-pinene resin, a β-pinene resin, a limonene resin, a dipentene resin, a β-pinene/limonene resin, a hydrogenated terpene resin obtained by hydrogenating the terpene resin. Examples of terpene phenol include a resin obtained by copolymerization of the above-described terpene compound and a phenol-based compound, and a resin obtained by hydrogenating the above-mentioned resin, and specifically include a resin obtained by condensation of the above-described terpene compound, a phenol-based compound, and formalin. Examples of the phenol-based compounds include phenol, bisphenol A, cresol, xylenol, and the like, for example. Examples of the aromatic modified terpene resins include a resin obtained by modifying the terpene resin with an aromatic compound, and a resin obtained by hydrogenating the above-mentioned resin. While the aromatic compound is not particularly limited as long as the aromatic compound is a compound having an aromatic ring, examples of the aromatic compounds include, for example, phenol compounds such as phenol, alkylphenol, alkoxyphenol, unsaturated carbohydrate group-containing phenol, and the like; naphthol compounds such as naphthol, alkylnaphthol, alkoxynaphthol, unsaturated hydrocarbon group-containing naphthol, and the like; styrene derivatives such as styrene, alkylstyrene, alkoxystyrene, unsaturated hydrocarbon group-containing styrene; coumarone, indene, and the like.

The phenol-based resin is a phenol resin, a modified phenol resin, and the like. The phenol resin is obtained by reacting phenol with aldehydes such as formaldehyde, acetaldehyde, furfural, and the like with an acid catalyst or an alkaline catalyst, and examples of the phenol resin include a novolac phenol resin being reacted with the acid catalyst and a resol phenol resin being reacted with the alkaline catalyst. The modified phenol resin is a phenol resin modified using compounds such as cashew oil, tall oil, amani oil, various animal and vegetable oils, unsaturated fatty acid, rosin, an alkylbenzene resin, aniline, melamine, and the like. From the viewpoint that a good hardness is obtained by a hardening reaction, the phenol-based resin is preferably a modified phenol resin. The phenol-based resin is exemplified by those manufactured by and available from BASF SE, Taoka Chemical Co., Ltd., Sumitomo Bakelite Co., Ltd., etc.

Examples of the C5 resin include an aliphatic-based petroleum resin and the like obtained by (co-)polymerizing a C5 fraction obtained by thermal cracking of naphtha in the petrochemeical industry. The C5 fraction includes olefin-based hydrocarbons such as 1-pentene, 2-pentene, 2-methyl-1-butene, and the like; diolefin-based hydrocarbons such as 2-methyl-1,3-butadiene, 1,2-pentadiene, 1.3-pentadiene, and the like. Examples of the C9 resin include a solid polymer

and the like obtained by (co-)polymerizing a C9 fraction using a Friedel-Crafts catalyst and the like, and specifically include a copolymer having indene as a main component, a copolymer having methylindene as a main component, a copolymer having α-methylstyrene as a main component, a copolymer having vinyltoluene as a main component, and the like. Preferably, the C5 resin is aliphatic based and the C9 resin is alicyclic based. Examples of the C5/C9 resin include a resin and the like obtained by copolymerizing the C5 fraction and the C9 fraction.

Examples of the p-t-butylphenol acetylene resin include a resin obtained by condensation reaction of p-t-butylphenol and acetylene.

While the acrylic-based resin is not particularly limited, a non-solvent acrylic-based resin can be used, for example.

Examples of the non-solvent acrylic-based resin include a (meth)acrylic resin (polymer) synthesized by a high-temperature continuous polymerization method (high-temperature continuous bulk polymerization method) (the methods disclosed in US Patent Publication No. 4,414,370, Japanese Patent Application Publication No. S59-6207, Japanese Examined Patent Application Publication No. H05-58005, Japanese Patent Application Publication No. H01-313522, US Patent Publication No. 5,010,166, Toagosei Annual Research Report TREND2000, No. 3, p. 42-45, and the like) without using a polymerization initiator, a chain transfer agent, an organic solvent, and the like, which are sub-materials, as much as possible. In the disclosure, (meth)acrylic means methacrylic and acrylic.

Examples of the monomer components constituting the above-mentioned acrylic-based resin include, for example, (meth)acrylic acid, (meth)acrylic acid esters (alkyl ester, aryl ester, aralkyl ester, and the like), (meth) acrylamide, and (meth)acrylic acid derivatives such as a (meth)acrylamide derivative.

Moreover, as the monomer component constituting the above-mentioned acrylic-based resin, along with the (meth)acrylic acid and the (meth) acrylic acid derivative, aromatic vinyl such as styrene, α-methylstyrene, vinyltoluene, vinylnaphthalene, divinylbenzene, trivinylbenzene, divinylnaphthalene, and the like can be used.

The above-described acrylic-based resin may be a resin formed of only a (meth)acrylic component, or may have a component other than the (meth)acrylic component as a constituting element. Moreover, the above-described acrylic-based resin may have a hydroxyl group, a carboxyl group, a silanol group, and the like.

A content of the solid polymers (a total content of solid coumarone-indene resins, and the like) is 1.0 parts by mass or more and 100.0 parts by mass or less, for example, based on 100 parts by mass of the rubber component.

As polymer components such as the liquid polymers, the solid polymers, and the like, those products from, for example, Maruzen Petrochemical Co., Ltd., Sumitomo Bakelite Co., Ltd., Yasuhara Chemical Co., Ltd., Tosoh Corporation, RUTGERS Chemicals AG, BASF SE, Arizona Chemical Company, Nitto Chemical Co., Ltd., Nippon Shokubai Co., Ltd., JX Energy Corporation, Arakawa Chemical Industries, Ltd., Taoka Chemical Co., Ltd., etc. can be used.

The rubber composition may comprise the oil. A content of the oil is, for example, 1.0 parts by mass or more and 100.0 parts by mass or less. The content of the oil is preferably 5.0 parts by mass or more, more preferably 10.0 parts by mass or more, and further preferably 15.0 parts by mass or more. Moreover, the content of the oil is preferably 80.0 parts by mass or less, more preferably 60.0 parts by mass or less, and further preferably 55.0 parts by mass or less. When the content of the oil is in the above-described range, the effect of comprising the oil is sufficiently obtained, making it possible to obtain a good abrasion resistance. Besides, an amount of oil comprised in rubber (oil-extended rubber) is also included in the content of the oil.

Examples of the oil include, for example, process oil, vegetable fat, or a mixture thereof. As the process oil, a paraffin-based process oil, an aroma-based process oil, a naphthene-based process oil, and the like, for example, can be used. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, tung oil, and the like. These oils may be used alone or two or more oils may be used in combination.

As the oils, those products from, for example, Idemitsu Kosan Co., Ltd., Sankyo Yuka Kogyo K.K., Japan Energy Corporation, Olisoy Co., Ltd., H&R Group, Hokoku Corporation, Shell Sekiyu K.K., Fuji Kosan Company, Ltd., etc. can be used.

The rubber composition may comprise the ester-based plasticizing agent. Examples of the ester-based plasticizing agent include, for example, liquid components such as dioctyl phthalate(DOP), dibutyl phthalate (DBP), tris(2ethylhexyl)phosphate(TOP), bis(2ethylhexyl)sebacate(DOS), and the like. A content based on 100 parts by mass of the rubber component when the rubber composition comprises the ester-based plasticizing agent is 1 part by mass or more and 60 parts by mass or less, for example.

A content of the plasticizing agent (when a plurality of plasticizing agents are used, a total content thereof) based on 100 parts by mass of the rubber component is preferably 5 parts by mass or more, more preferably 10 parts by mass or more, and further preferably 15 parts by mass or more. Moreover, the content of the plasticizing agent is preferably 120 parts by mass or less, more preferably 100 parts by mass or less, further preferably 90 parts by mass or less, and particularly preferably 80 parts by mass or less.

The rubber composition preferably comprises wax. A content of the wax is, for example, 0.5 to 20 parts by

mass based on 100 parts by mass of the rubber component. The content of the wax is preferably 1.0 parts by mass or more, preferably 1.2 parts by mass or more, and more preferably 1.5 parts by mass or more. Moreover, the content of the wax is preferably 18.0 parts by mass or less, preferably 15.0 parts by mass or less, and more preferably 10.0 parts by mass or less.

The wax is not particularly limited, and examples thereof include a petroleum-based wax such as a paraffin wax, a microcrystalline wax, and the like; a nature-based wax such as a vegetable wax, an animal wax, and the like; a synthetic wax such as a polymer and the like of ethylene, propylene, and the like. These waxes may be used alone or two or more thereof may be used in combination.

As the waxes, those products from, for example, Ouchi Shinko Chemical Industrial Co., Ltd., Nippon Seiro Co., Ltd., Seiko Chemical Corporation, etc. can be used.

The rubber composition preferably comprises an antioxidant. A content of the antioxidant is, for example, 1 to 10 parts by mass based on 100 parts by mass of the rubber component. The content of the antioxidant is preferably 0.5 parts by mass or more and more preferably 1 part by mass or more. Moreover, the content of the antioxidant is preferably 5 parts by mass or less and more preferably 3 parts by mass or less. Setting the content of the antioxidant to be in the above-described range allows sufficiently obtaining the antioxidizing effect and resulting in a tendency to make it possible to suppress discoloration due to the antioxidant being deposited on the tire surface.

Examples of the antioxidant include, for example, a naphthylamine-based antioxidant such as phenyl-$\alpha$-naphthylamine, and the like; a diphenylamine-based antioxidant such as octylated diphenylamine, 4-4'-bis($\alpha$,$\alpha$'-dimethylbenzyl)diphenylamine, and the like; a p-phenylenediamine-based antioxidant such as N-isopropyl-N'-phenyl-p- phenylenediamine, N-phenyl-N'-(1,3-dimethylbutyl)-p-phenylenediamine, N,N'-di-2-naphthyl-p-phenylenediamine, and the like; a quinoline-based antioxidant such as a polymer and the like of 2,2,4-trimethyl-1,2- dihydroquinoline; a monophenol-based antioxidant such as 2,6-di-t-butyl-4- methylphenol, styrenated phenol, and the like; a bis, tris, polyphenol-based antioxidant such as tetrakis-[methylene-3-(3',5'-di-t-butyl-4'-hydroxyphenyl) propionate]methane, and the like. These antioxidants may be used alone or two or more thereof may be used in combination.

As the antioxidants, those products from, for example, Seiko Chemical Corporation, Sumitomo Chemical Co., Ltd., Ouchi Shinko Chemical Industrial Co., Ltd., Flexis Inc., etc. can be used.

The rubber composition may comprise a processing aid. A content of the processing aid based on 100 parts by mass of the rubber component is, for example, 1 to 10 parts by mass. From the viewpoint of exhibiting an effect of improving the processability, the content of the processing aid is preferably 1.2 parts by mass or more, more preferably 1.5 part by mass or more. Moreover, from the viewpoints of abrasion resistance and breaking strength, the content of the processing aid is preferably 9 parts by mass or less, more preferably 8 parts by mass or less.

Examples of the processing aid include, for example, a fatty acid metal salt, a fatty acid amide, an amide ester, a silica surface active agent, a fatty acid ester, a mixture of a fatty acid metal salt and the amide ester, a mixture of the fatty acid metal salt and the fatty acid amide, and the like. These processing aids may be used alone or two or more processing aids may be used in combination.

Besides, as the processing aids, for example, those products from Schill+Seilacher GmbH, Performance Additives, etc. can be used.

The rubber composition may comprise a stearic acid. A content of the stearic acid based on 100 parts by mass of the rubber component is, for example, 0.5 to 10.0 parts by mass or more. As the stearic acid, what is conventionally known can be used, so that, for example, those products from NOF Corporation, NOF Corporation, Kao Corporation, Fujifilm Wako Pure Chemical Corporation, Chiba Shibosan KK, and the like can be used.

The rubber composition can comprise zinc oxide. A content of the zinc oxide based on 100 parts by mass of the rubber component is, for example, 0.5 to 10 parts by mass. As the zinc oxide, what is conventionally known can be used, and those products from, for example, Mitsui Mining & Smelting Co., Ltd., Toho Zinc Co., Ltd., Hakusui Tech Co.,Ltd., Seido Chemical Industry Co., Ltd, Sakai Chemical Industry Co., Ltd, etc. can be used.

The rubber composition preferably comprises a crosslinking agent such as sulfur and the like. A content of the crosslinking agent based on 100 parts by mass of the rubber component is, for example, 0.1 to 10.0 parts by mass.

As sulfur, a powdered sulfur, a precipitated sulfur, a colloidal sulfur, an insoluble sulfur, a highly dispersible sulfur, a soluble sulfur, and the like that are commonly used in the rubber industry can be used. They may be used alone or two or more sulfurs may be used in combination.

Besides, as sulfur, those products from, for example, Tsurumi Chemical Industry Co., Ltd., Karuizawa lou Kabushiki Kaisha, Shikoku Chemicals Corporation, Flexis Inc., Nippon Kanryu Industry Co., Ltd., Hosoi Chemical Industry Co., Ltd, etc. can be used.

Examples of crosslinking agents other than sulfur include, for example, a vulcanizing agent containing a sulfur atom, such as TACKIROLV200 manufactured by Taoka Chemical Co., Ltd., DURALINK HTS (1,6-hexamethylene-dithio sodium sulfate dodecahydrate) manufactured by Flexsys Inc., KA9188 (1,6-bis(N,N'-dibenzylthiocarbamoyldithio)hexane) manufactured by LANXESS and the like, and organic peroxides such as dicumyl peroxide and the like.

The rubber composition preferably comprises a vulcanization accelerator. A content of the vulcanization accelerator based on 100 parts by mass of the rubber component is, for example, 0.3 to 10.0 parts by mass.

Examples of the vulcanization accelerator can include a thiazole-based vulcanization accelerator such as 2-mercaptobenzothiazole, di-2-benzothiazolyl disulfide, and the like; a thiuram-based vulcanization accelerator such as tetramethylthiuram disulfide (TMTD), tetrabenzylthiuram disulfide (TBzTD), tetrakis(2-ethylhexyl)thiuram disulfide (TOT-N), and the like; a sulfenamide-based vulcanization accelerator such as N-cyclohexyl-2-benzothiazolyl sulfenamide (CBS), N-t-butyl-2-benzothiazolyl sulfenamide, N-oxyethylene-2-benzothiazolyl sulfenamide , N-oxyethylene-2-benzothiazolyl sulfenamide, N-N'-diisopropyl-2-benzothiazolyl sulfenamide, and the like; a guanidine-based vulcanization accelerator such as diphenylguanidine (DPG), di-o-tolylguanidine, o-tolylbiguanidine, and the like. They may be used alone or two or more thereof may be used in combination. Among them, from the viewpoint of the effect of the disclosure being suitably obtained, what comprises CBS and/or DPG is preferable.

In the rubber composition, in addition to the previously-described components, additives commonly used in the tire industry, such as, for example, organic peroxides; fillers such as calcium carbonate, talc, alumina, clay, aluminum hydroxide, mica, and the like; and the like can be further compounded. A content of these additives based on 100 parts by mass of the rubber component is, for example, 0.1 to 200 parts by mass.

The rubber composition is produced by a common method, for example, a manufacturing method comprising a base kneading step to knead a rubber component and a filler such as carbon black, silica, and the like; and a finishing kneading step to knead a kneaded product obtained in the base kneading step and a crosslinking agent. Kneading can be carried out by using a known (closed type) kneader such as a Bunbury mixer, kneader, open roll, and the like, for example.

The kneading temperature of the base kneading step is 50 to 200°C, for example, and the kneading time thereof is 30 seconds to 30 minutes, for example. In the base kneading step, compounding agents conventionally used in the rubber industry, such as, for example, softeners including oil and the like, stearic acid, zinc oxide, an antioxidant, wax, a vulcanization accelerator, etc., in addition to the above-described components, can be appropriately added and kneaded as needed.

In the finishing kneading step, the kneaded product obtained in the base kneading step and the crosslinking agent are kneaded. The kneading temperature of the finishing kneading step is room temperature to 80°C, for example, and the kneading time thereof is 1 to 15 minutes, for example. In the finishing kneading step, in addition to the above-described components, the vulcanization accelerator, zinc oxide, and the like can be appropriately added and kneaded as needed.

A pneumatic tire according to the disclosure is manufactured by a usual method using unvulcanized rubber compositions obtained via the finishing kneading step. In other words, an unvulcanized tire is formed by extruding the unvulcanized rubber compositions into the shape of each of tire members of the tread and molding them with other tire members on a tire molding machine using a usual method. The tire is obtained by heating and pressurizing this unvulcanized tire in a vulcanizing machine. The vulcanization process can be carried out by applying a known vulcanization means. The vulcanization temperature is 120 to 200°C, for example, and the vulcanization time is 5 to 15 minutes, for example.

The rubber composition can be used for a tread of various tires including, for example, a tire for a passenger car; a tire for a truck/bus; a tire for a motorcycle; a high-performance tire; and a winter tire such as a studless tire. These tires may be a run flat tire comprising a side reinforcing layer; a tire with a sound-absorption member, which tire comprises the sound-absorption member such as a sponge in an inner cavity of the tire; a tire with a sealing member, which tire comprises, inside or in a cavity thereof, a sealant that can seal the tire at the time of puncture; a tire with an electronic component, which tire comprises, inside or in a cavity thereof, the electronic component such as a sensor and a wireless tag, etc.

[Conclusion]

[1] A pneumatic tire according to one embodiment of the invention is a pneumatic tire comprising a tread part, wherein the tread part has two or more circumferential main grooves extending continuously in a circumferential direction of the tire, a width direction groove, and a sipe, the circumferential main groove being located on an outermost side when the tire is mounted to a vehicle is configured that a ratio W1/W2 of a groove width W1 at a 90% groove depth position when a groove depth at a groove bottom is assumed to be 100% and a groove width W2 at a tread part surface is 0.30 to 0.75, a ratio La/Lb is 0.10 to 0.20, wherein La is a length of the tire in the circumferential direction and Lb is a total sum length of a total length Lb1 of edge component lengths of the width direction groove in a width direction of the tire and a total length Lb2 of edge component lengths of the sipe in the width direction, and with respect to the rubber composition forming the tread part, 5°C tan $\delta$ is 0.10 to 0.60, |20°C tan $\delta$ - 50°C tan $\delta$| is 0.10 or less, and 20°C E' is 5.0 MPa or more, preferably 5.0 MPa or more and 20MPa or less.

[2] The pneumatic tire according to [1], wherein, with respect to the rubber composition forming the tread part, 5°C tan δ is 0.20 to 0.50, |20°C tan δ - 50°C tan δ| is 0.06 or less, and 20°C E' is 8.0 MPa or more, preferably 8.0 MPa or more and 16 MPa or less.

[3] The pneumatic tire according to [1] or [2], wherein the circumferential main groove being located on the outermost side when the tire is mounted to the vehicle, the ratio W1/W2 of the groove width W1 at the 90% groove depth position and the groove width W2 at the tread part surface is 0.30 to 0.60.

[4] The pneumatic tire according to any one of [1] to [3], wherein the ratio La/Lb is 0.13 to 0.17, wherein La is the length La of the tire in the circumferential direction and Lb is the total sum of the total length Lb1 of the edge component lengths of the width direction groove in the width direction and the total length Lb2 of the edge component lengths of the sipe in the width direction.

[5] The pneumatic tire according to any one of [1] to [4], wherein a ratio La/Lb1 is 0.20 to 0.40m wherein La is the length of the tire in the circumferential direction and Lb1 is a total length of edge component lengths of the width direction groove in the width direction.

[6] The pneumatic tire according to any one of [1] to [5], wherein the tread part has a pair of shoulder land parts and a center land part located between the pair of shoulder land parts, and the pair of shoulder land parts and the center land part are partitioned by the circumferential main grooves in the width direction, and a ratio $Lb_{sh}/Lb_{ce}$ satisfies $Lb_{sh}/Lb_{ce}$ <1, wherein $Lb_{sh}$ is a total sum length of a total length $Lb_{sh}1$ of edge component lengths of the width direction groove in the width direction in the shoulder land parts and a total length $Lb_{sh}2$ of edge component lengths of the sipe in the width direction in the shoulder land parts, and wherein Lbce is a total sum length of a total length Lbce1 of edge component lengths of the width direction groove in the width direction in the center land part and a total length $Lb_{ce}2$ of edge component lengths of the sipe in the width direction in the center land part.

[7] The pneumatic tire according to any one of [1] to [6], wherein the tread part has a pair of shoulder land parts and a center land part located between the pair of shoulder land parts, and the pair of shoulder land parts and the center land part are partitioned by the circumferential main grooves in the width direction, the center land part has the sipe, the sipe in the center land part extends so as to connect both edge parts, which are edges in the width direction, of the center land part, and an angle θ formed by the circumferential main groove and a straight line connecting both ends in the width direction of the sipe in the center land part is in a range of 60 to 80 degrees.

[8] The pneumatic tire according to any one of [1] to [7], wherein, when a tire cross-sectional width is Wt (mm) and an outer diameter of the tire is Dt (mm), the tire cross-sectional width Wt and the outer diameter Dt satisfy a formula below:

$$59.078 \times Wt^{0.460} \leq Dt,$$

and a dynamic storage modulus E' of a tread rubber at 30°C is 5.0 to 15. 0 MPa.

[9] The pneumatic tire according to any one of [1] to [8], wherein the tire is a tire for a passenger car.

[10] The pneumatic tire according to any one of [1] to [9], wherein a groove width W2 of each of the circumferential main grooves is 2.5% to 5% of a tread width TW of the tread part.

[11] The pneumatic tire according to any one of [1] to [10], wherein a groove depth of each of the circumferential main grooves is 5 to 10 mm.

[12] The pneumatic tire according to any one of [1] to [11], wherein a groove width of the width direction groove is 0.4% to 0.8% of a tread width TW of the tread part, a groove depth of the width direction groove is 0.50 to 0.60 times a groove depth of the circumferential main groove, a groove width of the sipe is 2.0 mm or less, and a groove depth of the sipe is 0.50 to 0.60 times the groove depth of the circumferential main groove.

[13] The pneumatic tire according to any one of [1] to [12], wherein the rubber composition forming the tread part comprises a rubber component comprising styrene-butadiene rubber, a content of the styrene-butadiene rubber is preferably 10% by mass or more, more preferably 20% by mass or more, further preferably 30% by mass or more, and particularly preferably 40% by mass or more, and the content of the styrene-butadiene rubber is preferably 90% by mass or less, more preferably 80% or less, and further preferably 75% by mass or less.

[14] The pneumatic tire according to any one of [1] to [13], wherein the rubber composition forming the tread part comprises 40 parts by mass or more, preferably 50 parts by mass or more, and more preferably 60 parts by mass or more of a filler comprising carbon black and/or silica based on 100 parts by mass of the rubber component.

[15] The pneumatic tire according to any one of [1] to [14], wherein the rubber composition forming the tread part comprises 5 parts by mass or more, preferably 10 parts by mass or more, and more preferably 15 parts by mass or more of a plasticizing agent based on 100 parts by mass of the rubber component.

EXAMPLE

Although the present disclosure will be specifically described based on Examples, the present disclosure is not limited to these Examples.

Various chemicals used in the Examples are described below.
Isoprene-based rubber: TSR20 (natural rubber)
SBR1: JSR1502 (E-SBR, styrene content: 23.5% by mass, non-oil-extended, available from JSR Corporation)
SBR2: JSR1723 (E-SBR, styrene content: 23.5% by mass, oil-extended rubber including 37.5 parts by mass of an oil component based on 100 parts by mass of the rubber component, available from JSR Corporation)
SBR3: Tufdene 4850 (S-SBR, styrene content: 40% by mass, oil-extended rubber including 50 parts by mass of an oil component based on 100 parts by mass of the rubber component, available from Asahi Kasei Corporation)
SBR4: Modified SBR manufactured in below-described Manufacturing example 1 (S-SBR, styrene content: 35% by mass, vinyl content: 45 mol%, weight-average molecular weight: 300,000, oil-extended rubber including 20 parts by mass of an oil component based on 100 parts by mass of the rubber component)
SBR5: SLR6430 (S-SBR, styrene content: 40% by mass, vinyl content: 24 mol%, oil-extended rubber including 37.5 parts by mass of an oil component based on 100 parts by mass of the rubber component, available from Trinseo S.A.)
SBR6: Modified SBR manufactured in below-described Manufacturing example 2 (S-SBR, styrene content: 25% by mass, vinyl content: 60 mol%, weight-average molecular weight: 200,000, non-oil-extended)
SBR7: Modified SBR manufactured in below-described Manufacturing example 3 (S-SBR, styrene content: 35% by mass, vinyl content: 50 mol%, weight-average molecular weight: 600,000, oil-extended rubber including 25 parts by mass of an oil component based on 100 parts by mass of the rubber component)
BR: BR150B (cis content: 97% by mass, available from Ube Industries, Ltd.)
Carbon black: Diablack (registered trademark) N220 ($N_2SA$: 115 $m^2/g$, available from Mitsubishi Chemical Corporation)
Silica 1: Zeosil 1115MP ($N_2SA$: 115 $m^2/g$, available from Solvay Japan, Ltd.)
Silica 2: Ultrasil VN3 ($N_2SA$: 175 $m^2/g$, available from Evonik Degussa)
Silane coupling agent: Si266 (bis(3-triethoxysilylpropyl)disulfide, available from Evonik Degussa)
Oil 1: Vivatec 500 (TDAE oil, available from H&R Group)
Resin: YS resin TO125 (aromatic modified terpene resin, softening point: 125°C, available from Yasuhara Chemical Co., Ltd.)
Wax: OZOACE 0355 (paraffin wax, available from Nippon Seiro Co., Ltd.)
Antioxidant 1: Antigen 6C (N-phenyl-N'-(1,3-dimethylbutyl)-p-phenylenediamine, available from Sumitomo Chemical Co., Ltd.)
Antioxidant 2: Antage RD (2,2,4-trimethyl-1,2-dihydroquinoline polymer, available from Kawaguchi Chemical Industry Co.,Ltd.)
Processing aid: EF44 (fatty acid zinc salt, available from Schill+Seilacher GmbH)
Stearic acid: Bead stearic acid "Tsubaki" manufactured by NOF CORPORATION
Zinc oxide: Zinc oxide No. 1 manufactured by Mitsui Mining & Smelting Co., Ltd.
Sulfur: Powdered sulfur manufactured by Tsurumi Chemical Industry Co., Ltd.
Vulcanization accelerator 1: Nocceler CZ (CBS, N-cyclohexyl-2-benzothiazolylsulfenamide, available from Ouchi Shinko Chemical Industrial Co., Ltd.)
Vulcanization accelerator 2: Nocceler D (DPG, 1,3-diphenylguanidine, available from Ouchi Shinko Chemical Industrial Co., Ltd.)

Manufacturing example 1 (Manufacturing of SBR4)

An autoclave reactor subjected to nitrogen purge was charged with cyclohexane, tetrahydrofuran, styrene, and 1,3-butadiene. Temperature of contents in the reactor was adjusted to 20°C, and n-butyllithium was added to initiate polymerization. The polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, 20 parts by mass of an extended oil based on 100 parts by mass of the polymer was added, and then the mixture was subjected to removal of solvent by a steam stripping and dried by a heat roll whose temperature was adjusted to 110°C to obtain a SBR4. The styrene amount was 35% by mass, the vinyl amount was 45%, and the weight-average molecular weight was 300,000.

Manufacturing example 2 (Manufacturing of SBR6)

An SBR 6 was obtained by processing in the same manner as in Manufacturing example 1, other than that the ratio of raw materials and other reaction conditions were adjusted to obtain the below-described predetermined SBR and that an extended oil was not added. The styrene amount was 25% by mass, the vinyl amount was 60%, and the weight-average molecular weight was 200,000.

Manufacturing example 3 (Manufacturing of SBR7)

An SBR 7 was obtained by processing in the same manner as in Manufacturing example 1, other than that the ratio of raw materials and other reaction conditions were adjusted to obtain the below-described predetermined SBR and that an extended oil was brought to be 25 parts by mass. The styrene amount was 35% by mass, the vinyl amount was 50%, and the weight-average molecular weight was 600,000.

According to the compounding amount shown in Table 1, using a 1.7 L closed Banbury mixer, chemicals other than sulfur and vulcanization accelerators were kneaded at a discharge temperature at 160°C for 4 minutes to obtain a kneaded product. Next, using an open roll, sulfur and vulcanization accelerators were added to the obtained kneaded product, and the mixture was kneaded for 4 minutes to obtain an unvulcanized rubber composition. Moreover, the obtained unvulcanized rubber composition was press-vulcanized for 12 minutes under a condition of 170°C to obtain a vulcanized rubber sheet for testing. In Table 1, when an oil-extended SBR (oil-extended rubber) is used as the SBR, a content of the SBR itself as a solid component included in the above-mentioned oil-extended SBR is recited as a compounding amount of "SBR", and an oil component in the above-mentioned oil-extended SBR is recited by adding it to the Oil column in Table 1.

<Viscoelasticity test>

A strip test piece having a width of 4 mm, a length of 20 mm, and a thickness of 2 mm was punched out of a sheet-shaped vulcanized rubber composition to be provided for testing. Under conditions of frequency 10 Hz and elongation strain 2.5%, tan $\delta$ at 5°C (5°C tan $\delta$), tan $\delta$ at 20°C (20°C tan $\delta$), and tan $\delta$ at 50°C (50°C tan $\delta$) of the rubber composition were measured using a dynamic viscoelasticity measurement apparatus EPLEXOR (registered trademark) series manufactured by GABO Qualimeter Testanlagen GmbH. Moreover, under conditions of initial strain 10%, dynamic strain 2%, and frequency 10 Hz, the dynamic storage modulus E'(MPa) thereof at 20°C were measured. The result is shown in Table 1.

[Table 1]

| | | Rubber composition | | | | |
|---|---|---|---|---|---|---|
| | | A | B | C | D | E |
| Compounding amount (parts by mass) | Natural rubber | - | - | - | 25 | - |
| | SBR1 | 40 | - | - | - | - |
| | SBR2 | 20 | 75 | - | - | - |
| | SBR3 | - | - | 47 | - | - |
| | SBR4 | - | - | 28 | - | - |
| | SBR5 | - | - | - | 10 | - |
| | SBR6 | - | - | - | 50 | 35 |
| | SBR7 | - | - | - | - | 40 |
| | BR | 40 | 25 | 25 | 15 | 25 |
| | Carbon black | 70 | 65 | 20 | 5 | 15 |
| | Silica1 | - | 40 | - | - | - |
| | Silica2 | - | - | 80 | 80 | 90 |
| | Silane coupling agent | - | 2.4 | 7 | 6.4 | 7.2 |
| | Oil | 18 | 49 | 39 | 9 | 15 |
| | Resin | - | - | - | 10 | 10 |
| | Wax | 2 | 2 | 2 | 2 | 2 |
| | Antioxidant1 | 2 | 2 | 2 | 2 | 2 |
| | Antioxidant2 | 1 | 1 | 1 | 1 | 1 |
| | Processing aid | 2 | - | - | 2 | 3 |
| | Stearic acid | 2 | 2 | 2 | 2 | 2 |
| | Zinc oxide | 2 | 2 | 2 | 2 | 2 |
| | Sulfur | 1.5 | 1.8 | 1.5 | 1.5 | 1.5 |
| | Vulcanization accelerator1 | 2 | 1.8 | 2 | 2 | 2 |
| | Vulcanization accelerator2 | - | 1 | 2 | 2 | 2 |
| Physical properties | 5°Ctanδ | 0.2 | 0.3 | 0.35 | 0.4 | 0.5 |
| | 20°Ctanδ | 0.26 | 0.39 | 0.31 | 0.27 | 0.28 |
| | 50°Ctanδ | 0.2 | 0.34 | 0.26 | 0.24 | 0.26 |
| | \|20°Ctanδ - 50°Ctanδ\| | 0.06 | 0.05 | 0.05 | 0.03 | 0.02 |
| | 20°CE'(MPa) | 10 | 15 | 12 | 11 | 13 |

Moreover, the obtained unvulcanized rubber composition was used to produce each rubber sheet to be in a shape of the tread rubber part, which rubber sheet was attached together with other members to produce a raw tire. Next, in a vulcanization process, the tire was subjected to press molding at 170°C for 20 minutes to produce a test tire having a size of 195/65R15.

Evaluation was performed by a method shown below using the obtained test tire. The evaluation result is shown in Table 2.

<Steering stability >

A test tire was mounted to four wheels of an FF vehicle with a displacement of 2000 cc, the vehicle was made

to run circularly on dry and wet road surfaces with one driver riding thereon, and the circulating time at that time was evaluated. The result is a score being (the circulating time of Comparative example 1)/(the circulating time of each Example)x100. The greater numerical value indicates having the steering stability on the dry road surface or the steering stability on the wet road surface. Besides, the "Overall evaluation" in Tables 2 and 3 is the number of a total of the number of points of the "Steering stability (Dry road surface)" and the number of points of the "Steering stability (Wet road surface)". The result of the test is shown in Tables 2 and 3.

[Table 2]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Conditions | Rubber composition | C | B | A | D | E | E | C | B | D | C | B |
| | W1/W2 | 0.37 | 0.35 | 0.51 | 0.5 | 0.32 | 0.51 | 0.48 | 0.5 | 0.7 | 0.72 | 0.69 |
| | La/Lb1 | 0.4 | 0.25 | 0.42 | 0.26 | 0.3 | 0.31 | 0.48 | 0.19 | 0.24 | 0.29 | 0.38 |
| | La/Lb | 0.18 | 0.12 | 0.18 | 0.12 | 0.15 | 0.15 | 0.15 | 0.14 | 0.12 | 0.14 | 0.19 |
| | Lbce | 3.7La | 5.5La | 3.7La | 5.4La | 4.3La | 4.5La | 4.3La | 4.4La | 5.5La | 4.5La | 3.7La |
| | Lbsh | 1.8La | 2.8La | 1.9La | 2.7La | 2.3La | 2.3La | 2.4La | 2.5La | 2.9La | 2.5La | 1.8La |
| Performance evaluation | Steering stability (Dry road surface) | 102 | 98 | 102 | 98 | 106 | 106 | 106 | 106 | 98 | 98 | 98 |
| | Steering stability (Wet road surface) | 100 | 104 | 100 | 104 | 108 | 113 | 107 | 109 | 106 | 104 | 103 |
| | Overall evaluation | 202 | 202 | 202 | 202 | 214 | 219 | 213 | 215 | 204 | 202 | 201 |

[Table 3]

| | | Com parative example 1 | Com parative example 2 | Com parative example 3 | Com parative example 4 | Com parative example 5 | Com parative example 6 |
|---|---|---|---|---|---|---|---|
| Conditions | Rubber composition | C | B | A | D | E | E |
| | W1/W2 | 0.2 | 0.8 | 0.2 | 0.5 | 0.8 | 0.5 |
| | La/Lb1 | 0.3 | 0.3 | 0.17 | 0.17 | 0.67 | 0.67 |
| | La/Lb | 0.15 | 0.15 | 0.08 | 0.08 | 0.3 | 0.3 |
| | Lbce | 4.3La | 4.3La | 8La | 8La | 2.3La | 2.3La |
| | Lbsh | 2.3La | 2.3La | 4.5La | 4.5La | 1La | 1La |
| Performance evaluation | Steering stability (Dry road surface) | 100 | 96 | 96 | 96 | 96 | 96 |
| | Steering stability (Wet road surface) | 100 | 96 | 98 | 98 | 96 | 96 |
| | Overall evaluation | 200 | 192 | 194 | 194 | 192 | 192 |

Based on the result in Tables 2 and 3, the pneumatic tire according to the embodiment makes it possible to improve the overall performance of steering stability on dry and wet roads.

REFERENCE SIGNS LIST

1 Pneumatic tire
11, 12, 13 Circumferential groove (circumferential main groove)
16 Outer shoulder land part
17 Inner shoulder land part
18 Outer-side center land part
19 Inner-side center land part
2 Tread part
21 Outer shoulder width direction groove
22 Inner shoulder width direction groove
23 Outer shoulder sipe
24 Inner shoulder sipe
25 Outer-side center width direction groove
26 Inner-side center width direction groove
27 Outer-side center sipe
28 Inner-side center sipe
3 Sidewall part
4 Bead part
5 Bead core
6 Carcass
6A Carcass ply
7 Belt layer
7A,7B Belt ply
C Tire circumferential direction
To Outer tread edge
Ti Inner tread edge

TW Tread width
W Tire width direction

## Claims

1. A pneumatic tire comprising a tread part,

wherein the tread part has two or more circumferential main grooves extending continuously in a circumferential direction of the tire, a width direction groove, and a sipe,
the circumferential main groove being located on an outermost side when the tire is mounted to a vehicle is configured that a ratio W1/W2 of a groove width W1 at a 90% groove depth position when a groove depth at a groove bottom is assumed to be 100% and a groove width W2 at a tread part surface is 0.30 to 0.75,
a ratio La/Lb is 0.10 to 0.20, wherein La is a length of the tire in the circumferential direction and Lb is a total sum length of a total length Lb1 of edge component lengths of the width direction groove in a width direction of the tire and a total length Lb2 of edge component lengths of the sipe in the width direction, and
with respect to the rubber composition forming the tread part, 5°C tan $\delta$ is 0.10 to 0.60, |20°C tan $\delta$ - 50°C tan $\delta$| is 0.10 or less, and 20°C E' is 5.0 MPa or more.

2. The pneumatic tire of claim 1, wherein, with respect to the rubber composition forming the tread part, 5°C tan $\delta$ is 0.20 to 0.50, |20°C tan $\delta$ - 50°C tan $\delta$| is 0.06 or less, and 20°C E' is 8.0 MPa or more.

3. The pneumatic tire of claim 1 or 2, wherein the circumferential main groove being located on the outermost side when the tire is mounted to the vehicle, the ratio W1/W2 of the groove width W1 at the 90% groove depth position and the groove width W2 at the tread part surface is 0.30 to 0.60.

4. The pneumatic tire of any one of claims 1 to 3, wherein the ratio La/Lb is 0.13 to 0.17, wherein La is the length La of the tire in the circumferential direction and Lb is the total sum of the total length Lb1 of the edge component lengths of the width direction groove in the width direction and the total length Lb2 of the edge component lengths of the sipe in the width direction.

5. The pneumatic tire of any one of claims 1 to 3, wherein a ratio La/Lb1 is 0.20 to 0.40m wherein La is the length of the tire in the circumferential direction and Lb1 is a total length of edge component lengths of the width direction groove in the width direction.

6. The pneumatic tire of any one of claims 1 to 5,

wherein the tread part has a pair of shoulder land parts and a center land part located between the pair of shoulder land parts, and the pair of shoulder land parts and the center land part are partitioned by the circumferential main grooves in the width direction, and
a ratio $Lb_{sh}/Lb_{ce}$ satisfies $Lb_{sh}/Lb_{ce}$ <1,
wherein $Lb_{sh}$ is a total sum length of a total length $Lb_{sh}1$ of edge component lengths of the width direction groove in the width direction in the shoulder land parts and a total length $Lb_{sh}2$ of edge component lengths of the sipe in the width direction in the shoulder land parts, and
wherein Lbce is a total sum length of a total length Lbce1 of edge component lengths of the width direction groove in the width direction in the center land part and a total length $Lb_{ce}2$ of edge component lengths of the sipe in the width direction in the center land part.

7. The pneumatic tire of any one of claims 1 to 6,

wherein the tread part has a pair of shoulder land parts and a center land part located between the pair of shoulder land parts, and the pair of shoulder land parts and the center land part are partitioned by the circumferential main grooves in the width direction,
the center land part has the sipe, the sipe in the center land part extends so as to connect both edge parts, which are edges in the width direction, of the center land part, and an angle $\theta$ formed by the circumferential main groove and a straight line connecting both ends in the width direction of the sipe in the center land part is in a range of 60 to 80 degrees.

8. The pneumatic tire of any one of claims 1 to 7,

wherein, when a tire cross-sectional width is Wt (mm) and an outer diameter of the tire is Dt (mm), the tire cross-sectional width Wt and the outer diameter Dt satisfy a formula below:

$$59.078 \times Wt^{0.460} \leq Dt,$$

and a dynamic storage modulus E' of a tread rubber at 30°C is 5.0 to 15. 0 MPa.

9. The pneumatic tire of any one of claims 1 to 8, wherein the tire is a tire for a passenger car.

10. The pneumatic tire of any one of claims 1 to 9, wherein a groove width W2 of each of the circumferential main grooves is 2.5% to 5% of a tread width TW of the tread part.

11. The pneumatic tire of any one of claims 1 to 10, wherein a groove depth of each of the circumferential main grooves is 5 to 10 mm.

12. The pneumatic tire according to any one of claims 1 to 11, wherein a groove width of the width direction groove is 0.4% to 0.8% of a tread width TW of the tread part, a groove depth of the width direction groove is 0.50 to 0.60 times a groove depth of the circumferential main groove, a groove width of the sipe is 2.0 mm or less, and a groove depth of the sipe is 0.50 to 0.60 times the groove depth of the circumferential main groove.

13. The pneumatic tire according to any one of claims 1 to 12, wherein the rubber composition forming the tread part comprises a rubber component comprising styrene-butadiene rubber.

14. The pneumatic tire according to any one of claims 1 to 13, wherein the rubber composition forming the tread part comprises 40 parts by mass or more of a filler comprising carbon black and/or silica based on 100 parts by mass of the rubber component.

15. The pneumatic tire according to any one of claims 1 to 14, wherein the rubber composition forming the tread part comprises 5 parts by mass or more of a plasticizing agent based on 100 parts by mass of the rubber component.

FIG.1

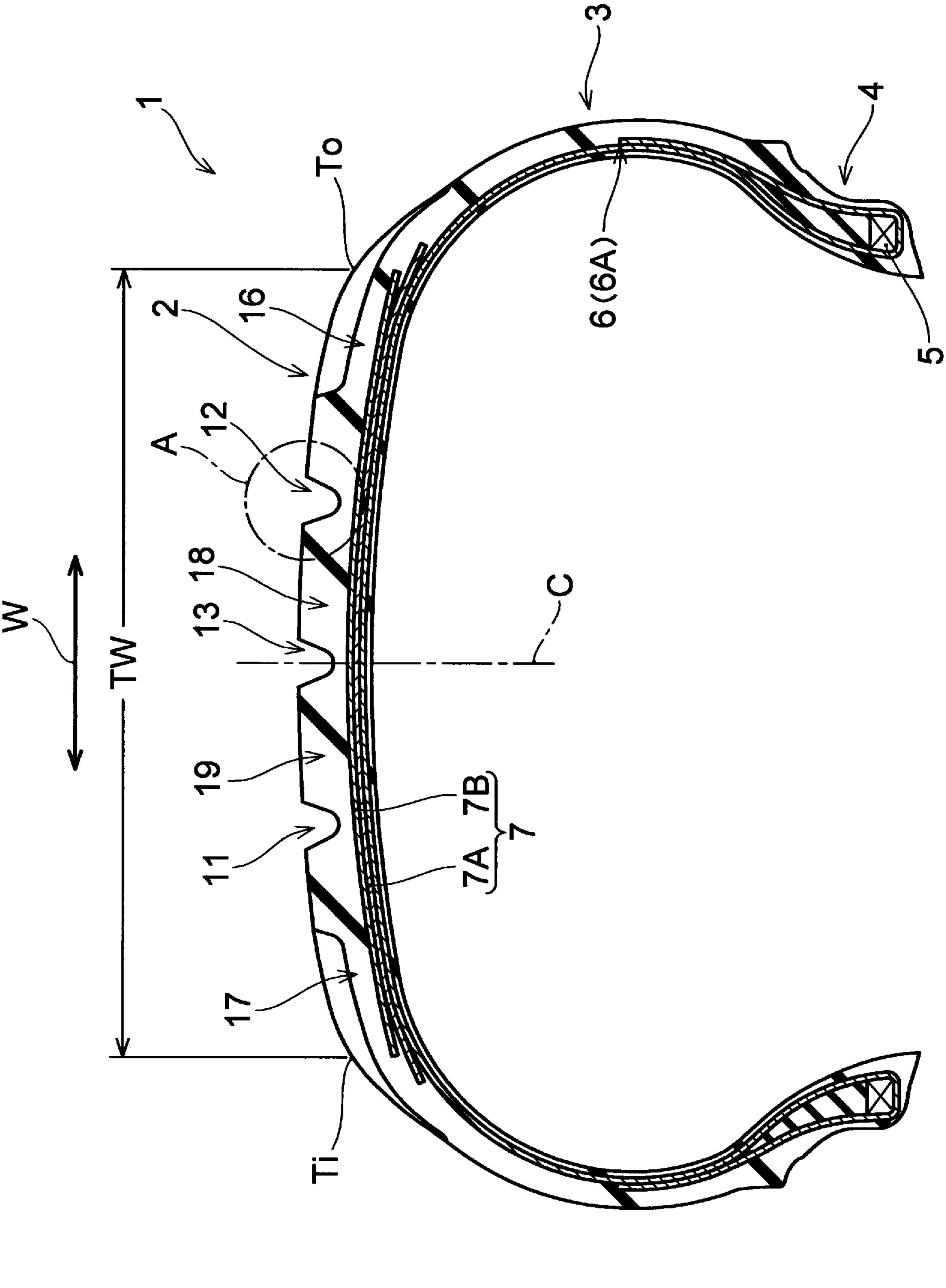

FIG.2

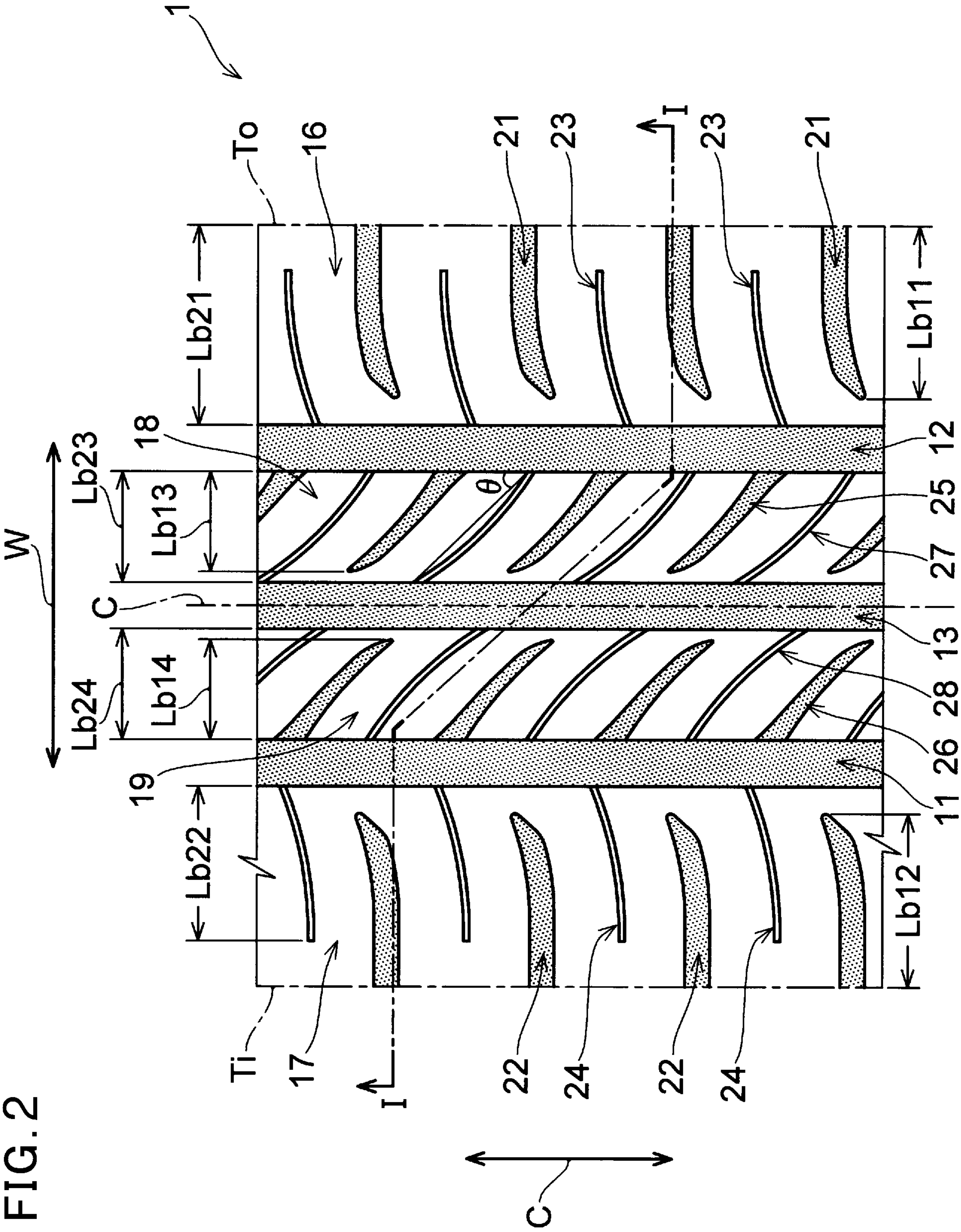
1
To
16
21
23
23
21
I
Lb21
Lb11
18
12
Lb23
Lb13
θ
25
27
W
C
13
Lb24
Lb14
28
26
19
11
Lb22
Lb12
Ti
17
22
24
22
24
C

FIG. 3

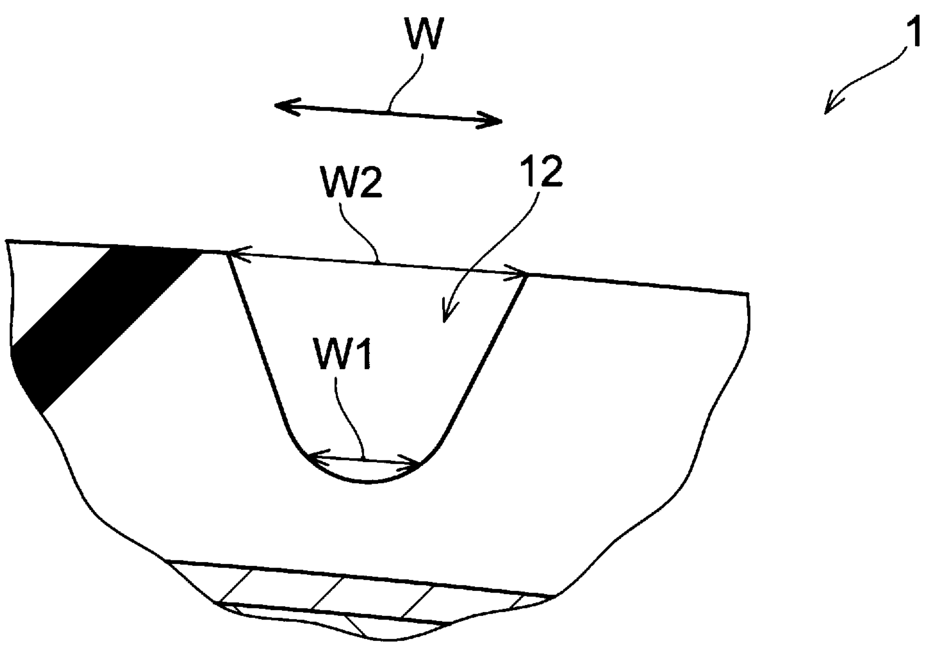

**INTERNATIONAL SEARCH REPORT**

International application No. PCT/JP2020/032438

A. CLASSIFICATION OF SUBJECT MATTER
Int.Cl. B60C3/04(2006.01)i, B60C11/00(2006.01)i, B60C11/12(2006.01)i, B60C11/13(2006.01)i
FI: B60C11/00D, B60C3/04Z, B60C11/13B, B60C11/13C, B60C11/12D
According to International Patent Classification (IPC) or to both national classification and IPC

B. FIELDS SEARCHED
Minimum documentation searched (classification system followed by classification symbols)
Int.Cl. B60C3/04, B60C11/00, B60C11/12, B60C11/13

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2019-94007 A (SUMITOMO RUBBER INDUSTRIES, LTD.) 20 June 2019 (2019-06-20), claims, fig. 1-11 | 1-15 |
| A | WO 2017/204354 A1 (BRIDGESTONE CORPORATION) 30 November 2017 (2017-11-30), claims, paragraphs [0021], [0026] | 1-15 |
| A | JP 2019-116574 A (SUMITOMO RUBBER INDUSTRIES, LTD.) 18 July 2019 (2019-07-18), examples 1-14 | 1-15 |
| A | JP 2019-131756 A (SUMITOMO RUBBER INDUSTRIES, LTD.) 08 August 2019 (2019-08-08), examples 1-4 | 1-15 |
| A | JP 2018-154749 A (SUMITOMO RUBBER INDUSTRIES, LTD.) 04 October 2018 (2018-10-04), examples 1-9 | 1-15 |

☒ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 October 2020 | 27 October 2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/032438

C (Continuation). DOCUMENTS CONSIDERED TO BE RELEVANT

| Category* | Citation of document, with indication, where appropriate, of the relevant passages | Relevant to claim No. |
|---|---|---|
| A | JP 2017-149897 A (SUMITOMO RUBBER INDUSTRIES, LTD.) 31 August 2017 (2017-08-31), examples 1-8 | 1-15 |
| A | WO 2019/017067 A1 (SUMITOMO RUBBER INDUSTRIES, LTD.) 24 January 2019 (2019-01-24), examples 1-15 | 1-15 |
| A | JP 2019-99062 A (SUMITOMO RUBBER INDUSTRIES, LTD.) 24 June 2019 (2019-06-24), examples 1-5 | 1-15 |
| A | JP 2016-101803 A (SUMITOMO RUBBER INDUSTRIES, LTD.) 02 June 2016 (2016-06-02), claims, paragraph [0028], fig. 3 | 1-15 |

Form PCT/ISA/210 (second sheet) (January 2015)

**INTERNATIONAL SEARCH REPORT**
Information on patent family members

International application No.
PCT/JP2020/032438

| | | |
|---|---|---|
| JP 2019-94007 A | 20 June 2019 | US 2019/0160879 A1<br>claims, fig. 1-11<br>EP 3489036 A1<br>CN 109968913 A |
| WO 2017/204354 A1 | 30 November 2017 | US 2019/0168542 A1<br>claims, paragraphs [0031], [0039]<br>EP 3466719 A1<br>CN 109153286 A<br>JP 2017-210191 A |
| JP 2019-116574 A | 18 July 2019 | US 2019/0193464 A1<br>examples 1-14 |
| JP 2019-131756 A | 08 August 2019 | (Family: none) |
| JP 2018-154749 A | 04 October 2018 | (Family: none) |
| JP 2017-149897 A | 31 August 2017 | (Family: none) |
| WO 2019/017067 A1 | 24 January 2019 | CN 110869433 A |
| JP 2019-99062 A | 24 June 2019 | WO 2019/111717 A1 |
| JP 2016-101803 A | 02 June 2016 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000135904 A
- JP 2010111753 A
- US 4414370 A
- JP S596207 A
- JP H0558005 B
- JP H01313522 B
- US 5010166 A

### Non-patent literature cited in the description

- **TOAGOSEI.** *Annual Research Report TREND2000,* vol. 3, 42-45